(19) Europäisches Patentamt
European Patent Office
Office européen des brevets

(11) **EP 1 791 199 B1**

(12) **EUROPEAN PATENT SPECIFICATION**

(45) Date of publication and mention
of the grant of the patent:
**26.12.2012 Bulletin 2012/52**

(51) Int Cl.:
*H01M 4/02* (2006.01)       *H01M 4/38* (2006.01)
*H01M 4/48* (2010.01)       *H01M 4/587* (2010.01)
*H01M 4/62* (2006.01)       *H01M 10/0525* (2010.01)
*H01M 4/13* (2010.01)       *H01M 4/133* (2010.01)
*H01M 4/36* (2006.01)

(21) Application number: **05755820.7**

(22) Date of filing: **29.06.2005**

(86) International application number:
**PCT/JP2005/011974**

(87) International publication number:
**WO 2006/008930 (26.01.2006 Gazette 2006/04)**

(54) **NEGATIVE ELECTRODE MATERIAL FOR LITHIUM SECONDARY BATTERY, METHOD FOR PRODUCING SAME, NEGATIVE ELECTRODE FOR LITHIUM SECONDARY BATTERY USING SAME AND LITHIUM SECONDARY BATTERY**

NEGATIV-ELEKTRODENMATERIAL FÜR EINE LITHIUM-SEKUNDÄRBATTERIE, HERSTELLUNGSVERFAHREN DAFÜR, NEGATIVELEKTRODE FÜR EINE LITHIUM-SEKUNDÄRBATTERIE DAMIT UND LITHIUM-SEKUNDÄRBATTERIE

MATÉRIAU À ÉLECTRODE NÉGATIVE POUR ACCUMULATEUR AU LITHIUM, PROCÉDÉ DE PRODUCTION, ÉLECTRODE NÉGATIVE POUR ACCUMULATEUR AU LITHIUM UTILISANT CE PROCÉDÉ ET ACCUMULATEUR AU LITHIUM

(84) Designated Contracting States:
**DE**

(30) Priority: **20.07.2004 JP 2004211820**

(43) Date of publication of application:
**30.05.2007 Bulletin 2007/22**

(73) Proprietor: **Mitsubishi Chemical Corporation
Chiyoda-ku
Tokyo 100-8251 (JP)**

(72) Inventors:
• **YOKOMIZO, Masakazu,
Mitsubishi C.G.S. & T.R.C.Inc.
Inashiki-gun,
Ibaraki, 300-0332 (JP)**
• **SATOU, Hideharu,
M.C.G.S. & T.R.C., Inc.
Inashiki-gun,
Ibaraki 300-0332 (JP)**

• **KAMADA, Tomiyuki,
M.C.G.Sc. & T. R. C.,Inc.
Inashiki-gun,
Ibaraki 300-0332 (JP)**

(74) Representative: **HOFFMANN EITLE
Patent- und Rechtsanwälte
Arabellastrasse 4
81925 München (DE)**

(56) References cited:
**EP-A1- 1 244 158       JP-A- 6 283 157
JP-A- 9 219 188         JP-A- 9 249 407
JP-A- 10 106 540        JP-A- 10 214 629
JP-A- 10 312 803        JP-A- 11 120 992
JP-A- 2003 012 311      JP-A- 2004 185 810
US-B1- 6 428 929**

## Description

[Technical Field]

The present invention relates to a negative-electrode material for a lithium secondary battery and a method of producing the material, and also to a negative electrode for a lithium secondary battery and a lithium secondary battery each employing the material.

[Background Art]

Miniaturization of electronic devices in recent years increases the demand for secondary batteries with high capacities. Attention is being given to nonaqueous-solvent lithium secondary batteries, which have higher energy densities compared to nickel-cadmium batteries and nickel-hydrogen batteries.

Lithium metal was first examined for its use as a negative-electrode active material, although it turned out to have the possibility that repeated charges and discharges may bring about deposition of lithium as dendrites, which pierce the separator to the positive electrode to cause shortings. Therefore, attention is currently focused on a carbon material that allows intercalation and deintercalation of lithium ions between its layers during the charge and discharge process and thereby prevents deposition of lithium metal, for use as a negative-electrode active material.

For example, Patent Document 1 discloses the use of graphite as the carbon material. It is known that in particular, a graphite with a high degree of graphitization, when used as a negative-electrode active material for a lithium secondary battery, can yield a capacity close to the theoretical capacity of graphite for lithium intercalation, i.e. 372mAh/g, and is preferred as an active material.

On the other hand, solvents used for nonaqueous liquid electrolytes include: high-permittivity solvents exemplified by cyclic carbonates such as ethylene carbonate, propylene carbonate, and butylene carbonate; and low-viscosity solvents exemplified by chain carbonates such as dimethyl carbonate, ethyl methyl carbonate, and diethyl carbonate, cyclic esters such as $\gamma$-butyrolactone, cyclic ethers such as tetrahydrofuran and 1,3-dioxolane, and chain ethers such as 1, 2-dimethoxyethane. These may be used either singly or as a mixture. Especially a mixture of a high-permittivity solvent and a low-viscosity solvent is frequently used. As an electrolyte, for example, $LiPF_6$, $LiBF_4$, $LiClO_4$, and $LiN(SO_2CF_3)_2$ are used either singly or in combination of two or more.

However, when the aforementioned liquid electrolyte is used for a secondary battery in combination with a negative electrode made of a carbon material (negative-electrode active material), the carbon material reacts with the liquid electrolyte during charging to form a passive film containing lithium on the carbon material surface. This brings about problems such as: an increase in irreversible capacity; degradation of the liquid electrolyte due to the reaction of the negative-electrode active material and the liquid electrolyte during charge or discharge; and a reduction in capacity retention ratio (cycle characteristics) due to the reaction of the negative-electrode active material and the liquid electrolyte during repeated charge and discharge. Factors responsible for these problems probably include the large specific surface area and the abundance of surface functional groups of the negative-electrode active material.

Against this backdrop, some techniques are known to coat various negative-electrode active materials with, e.g., a polymer for the purpose of reducing irreversible capacity. Examples include: the technique in which a graphitized powder of mesocarbon microbeads is added into a suspended dispersion of a solid polymer electrolyte such as tetrafluoroethylene- perfluorovinyl ether copolymer (trade name: Nafion[R]) to coat the powder with the solid polymer (Patent Document 2); and the technique in which a carbon material such as pitch coke particles is dispersed into a solution of, e.g., poly(vinyl alcohol), polytetrafluoroethylene, polyethylene, or styrene-butadiene-rubber, and the dispersion is then spray-dried (Patent Document 1).

However, according to the conventional polymeric materials typified by the techniques disclosed in Patent Document 1 and Patent Document 2, a carbon material coated with a polymer having high solubility in a liquid electrolytes is, when actually used in a battery, liable to gradually dissolve in or swell with the liquid electrolyte, tardily enlarging the reaction area and causing an increase in irreversible capacity. On the other hand, direct coating of a carbon material with a polymer having low solubility in a liquid electrolyte causes a decrease in active area, which allows the passage of Li, to increase resistance, causing marked declines in charge-discharge capacity and cycle performance when used with a high current capacity.

As a technique to solve these problems, Patent Document 3 discloses a method which uses, as binders for forming a coating, a polymer insoluble in an organic liquid electrolyte together with a polymer soluble in or gelable with the organic liquid electrolyte.

[Patent Document 1] Japanese Patent Application Laid-Open Publication No. HEI9-219188
[Patent Document 2] Japanese Patent Application Laid-Open Publication No. HEI 7-235328

[Patent Document 3] Japanese Patent Application Laid-Open Publication No. HEI 10-214629

[Disclosure of the Invention]

[Problem to Be Solved by the Invention]

However, the technique disclosed in Patent Document 3 is silent about site selectivity between the polymer insoluble in the organic liquid electrolyte and the polymer soluble in or gelable with the organic liquid electrolyte: these polymers are uniformly distributed over the whole active-material surface. As a result, the polymer insoluble in the organic liquid electrolyte even coats the active area which allows the passage of Li (pores), thereby impeding improvements in charge-discharge capacity when used with a high current capacity.

JP 10 106540 A relates to a sheet-form electrode for use in a lithium secondary battery which is prepared from a mixture material film which is prepared by binding active material particles onto a conductive base using a polymer binder and a high-polymer solid electrolyte.

US 6,428,929 B1 relates to negative electrodes for high-energy lithium-ion batteries. The electrode composition used in this document contains a latex additive based on an acrylic acid derivative copolymer and a polymer binder containing butadiene units.

The present invention has been made in view of the above problems. An objective of the present invention is to provide a negative-electrode material for a lithium secondary battery that can be produced through a simple procedure and can yield a lithium secondary battery having a high electrode-mechanical strength, being excellent in immersibility, involving a small initial irreversible capacity, being excellent in charge-discharge characteristic under high current densities, and having a high cycle retention ratio, i.e. having an excellent balance of various battery characteristics, and a method of producing the negative-electrode material. Another objective of the present invention is to provide a negative electrode for a lithium secondary battery and a lithium secondary battery each employing the material.

[Means for Solving the Problem]

The present inventors carried out an earnest study to solve the aforementioned problems, noting that many negative-electrode active material particles, such as carbon-material particles, metal particles, and metal-oxide particles, have a porous site which allows that a polymeric material to come into contact with the site and enter the site. As a consequence, the inventors have come to a material in which two or more different polymeric materials are each attached to different sites of negative-electrode active material particles, specifically, a material in which a polymeric material having high solubility in a liquid electrolyte and a polymeric material having low solubility in the liquid electrolyte are attached separately to the interior of the negative-electrode active material particles (pore site) and the exterior of the negative-electrode active material particles (outer surface site), respectively, and have found that the material can provide a lithium secondary battery having a high electrode-mechanical strength, being excellent in immersibility, involving a small initial irreversible capacity, being excellent in charge-discharge characteristic under high current densities, and having a high cycle retention ratio, i.e. having an excellent balance of various battery characteristics.

An aspect of the present invention provides a negative-electrode material for a lithium secondary battery, comprising: particles (A) selected from the group consisting of carbon-material particles, metal particles, and metal-oxide particles; and two or more different polymeric materials each attached to different sites of the particles, as defined in claim 1.

Another aspect of the present invention provides a method of producing the above negative-electrode material for a lithium secondary battery, comprising at least the steps of: attaching at least one polymeric material (C-1) to particles (A) selected from the group consisting of carbon-material particles, metal particles, and metal-oxide particles, the polymeric material (C-1) having high solubility in a reference liquid electrolyte (B), in which 1M $LiPF_6$ is dissolved in a mixture solvent of ethylene carbonate and ethyl methyl carbonate at a volume ratio of 3:7; and a second attachment step, carried out after the first attachment step, of attaching at least one polymeric material (C-2) to the particles (A), the polymeric material (C-2) having low solubility in the reference liquid electrolyte (B).

Another aspect of the present invention provides a negative electrode for a lithium secondary battery, comprising: a current collector; and an active-material layer formed on the current collector, the active-material layer containing a binder and the aforementioned negative-electrode material.

Still another aspect of the present invention provides a lithium secondary battery comprising: a positive electrode and a negative electrode capable of intercalating and deintercalating lithium ions; and an electrolyte; wherein the negative electrode is the aforementioned negative electrode.

[Advantageous Effects of the Invention]

The negative-electrode material for a lithium secondary battery according to the present invention can provide a lithium secondary battery having a high electrode-mechanical strength, being excellent in immersibility, involving only a small initial irreversible capacity, being excellent in charge-discharge characteristic under high current densities, and having a high cycle retention ratio, i.e. having an excellent balance of various battery characteristics.
Also, the method of producing a negative-electrode material for a lithium secondary battery according to the present invention can produce the negative-electrode material having the aforementioned advantageous effects with a simple procedure.

[Best Modes for Carrying Out the Invention]

The present invention will be explained below in detail. However, the present invention is not limited to the following explanation but can be embodied with various modifications unless deviated from the gist of the present invention.

[1. Negative-Electrode Material]

The negative-electrode material for a lithium secondary battery according to the present invention (hereinafter also called "the negative-electrode material of the present invention") is a material mainly used as a negative-electrode active material for a lithium secondary battery, and includes particles (A) selected from the group consisting of carbon-material particles, metal particles, and metal-oxide particles and two or more different polymeric materials (C-1), (C-2) each attached to different sites of the particles.

[Particles (A)]

Material for Particles (A):

The particles (A) are a single kind or plural kinds of particles selected from the group consisting of carbon-material particles, metal particles, and metal-oxide particles. The particles to be used are usually made of any of various materials known as negative-electrode active materials.
Examples of the negative-electrode active materials are: carbon materials capable of intercalating and deintercalating lithium; metal oxides capable of intercalating and deintercalating lithium, such as tin oxide, antimony tin oxide, silicon monoxide, and vanadium oxide; lithium metal; metals that can be alloyed with lithium, such as aluminum, silicon, tin, antimony, lead, arsenic, zinc, bismuth, copper, cadmium, silver, gold, platinum, palladium, magnesium, sodium, and potassium; alloys containing the aforementioned metals (including intermetallic compounds); composite alloy compounds containing both lithium and either a metal that can be alloyed with lithium or an alloy containing the metal; and metal lithium nitrides such as cobalt lithium nitride. These may be used either singly or in combination of two or more. Preferred among these are carbon materials. Examples include various carbon materials with different degrees of graphitization, ranging from graphite materials to amorphous materials.
The particles (A) preferably have a porous structure that allows a polymeric material to be attached to the interior of each particle. In view of these conditions, besides ease of commercial availability, especially preferable are particles made of graphite or a carbon material with a low degree of graphitization. We have confirmed that the use of graphite particles as the particles (A) produces a markedly large effect of improving charge-discharge characteristic under high current densities, as compared to the cases where the other negative-electrode active materials are used.
As graphite, either natural graphite or artificial graphite can be used. Preferred graphite is low in impurities and may undergo various purification treatments as required. Graphite preferably has a high degree of graphitization. Specifically, the interlayer spacing $d_{002}$ of the (002) planes measured in accordance with wide-angle X-ray diffraction is preferably smaller than 337Å (33.7nm).
Examples of artificial graphite are the ones derived from organic substances such as coal tar pitch, coal-derived heavy oil, normal-pressure residual oil, petroleum-derived heavy oil, aromatic hydrocarbons, nitrogen-containing cyclic compounds, sulfur-containing cyclic compounds, polyphenylene, poly(vinyl chloride), poly(vinyl alcohol), polyacrylonitrile, poly(vinyl butyral), natural polymers, poly(phenylene sulfide), poly(phenylene oxide), furfuryl alcohol resin, phenol-formaldehyde resin, and imide resin, through calcination at a temperature within a range of usually 2500°C or higher and usually 3200°C or lower for graphitization.
Carbon materials with low degrees of graphitization are derived from organic substances through calcination at a temperature of usually 2500°C or lower. Examples of organic substances are: coal-derived heavy oils such as coal tar pitch and carbonization liquefied oil; straight-run heavy oils such as normal-pressure residual oil and reduced-pressure residual oil; petroleum-derived heavy oils such as cracked heavy oils including ethylene tar, a by-product from thermal cracking of crude oil or naphtha, for example; aromatic hydrocarbons such as acenaphthylene, decacyclene, and anthracene; nitrogen-containing cyclic compounds such as phenazine and acridine; sulfur-containing cyclic compounds such as thiophene; aliphatic cyclic compounds such as adamantane; polyphenylenes such as biphenyl and terphenyl; poly(vinyl ester)s such as poly(vinyl chloride), poly(vinyl acetate), and poly(vinyl butyral); and thermoplastic polymers such as poly(vinyl alcohol).

In view of obtaining carbon materials having low degrees of graphitization, calcination temperatures of organic substances should be usually 600°C or higher, preferably 900°C or higher, more preferably 950°C or higher. The upper limit varies depending on the target degree of graphitization to be imparted to the resultant carbon material, although being usually 2500°C or lower, preferably 2000°C or lower, more preferably 1400°C or lower. On calcination, the organic substance may be mixed with an acid such as phosphoric acid, boric acid, or hydrochloric acid, or an alkali such as sodium hydroxide.

The particles (A), as long as being selected from the group consisting of the aforementioned carbon-material particles (graphite, carbon materials with low degrees of graphitization), metal particles, and metal-oxide particles, may be used either singly or as a mixture of any two or more. Also, each of the individual particles may contain two or more materials. For example, the particles may be either carbonaceous particles obtained by covering graphite surface with a carbon material having a low degree of graphitization or particles obtained by aggregating graphite particles with an appropriate organic substance and graphitizing the particles again. Further, the aggregate particles may also contain a metal that can be alloyed with Li, such as Sn, Si, Al, and Bi. The following explanation will be made with taking carbon-material particles as an instance, although the particles (A) are by no means limited to carbon-material particles.

• Properties of Particles (A):

The average particle diameter of the particles (A) is usually 5μm or larger, and usually 50μm or smaller, preferably 25μm or smaller, most preferably 18μm or smaller. When the particles (A) are carbon material, they may be secondary particles, each of which is an aggregation of plural particles. In this case, the average particle diameter of the secondary particles is preferably within the aforementioned range, the average particle diameter of their primary particles is preferred to be usually 15μm or smaller. When the particle diameter is too small, the particles may increase its reaction area with a liquid electrolyte because of its large specific surface area, likely to increase irreversible capacity. On the other hand, when an active material whose particle diameter is too large is made into a slurry in combination with a binder, the slurry may cause uncoated portion by trailing large particles on coating electrode due to lumps in the slurry when applied onto a current collector, making it difficult to form an active-material layer with a uniform film thickness.

The shapes of the particles (A) is not particularly limited, although being preferably spherical shapes formed through spheroidization treatment, because the shapes of spaces defined between the particles become uniform when the particles are made into the form of an electrode. Examples of spheroidization treatment include mechanical-physical treatments and chemical treatments such as oxidation treatment and plasma treatment. As regards the spheroidicity, it is desired that the circularity of the particles whose particle diameters are within a range of 10 to 40μm is usually 0.80 or higher, preferably 0.90 or higher, still preferably 0.93 or higher.

Circularity is defined by the following equation. If the circularity is 1, the particle is in a theoretical perfect sphere.

```
Circularity
    (the circumference of a circle of equivalent to the
    particle area
        / the circumference of the particle)
```

The circularity can be measured, for example, using a flow particle image analyzer (e.g. FPIA manufactured by Sysmex Corporation) according to the following procedure: 0.2g of a measurement target (i.e. graphite material herein) is mixed with an aqueous solution (about 50ml) of 0.2 volume % of polyoxyethylene (20) sorbitan monolaurate as a surfactant. After the mixture is irradiated with ultrasonic waves of 28kHz in an output of 60W for a minute, the particles whose diameters are within a range of 10 to 400μm are measured with a specified detection range of from 0.6 to 40μm to thereby determine the degree of circularity.

When the particles are measured in accordance with Hg porosimetry (mercury press-in method), the amount of spaces in the particles whose diameters are 1μm or smaller, i.e. the amount of asperities formed by steps on the particle surface, is preferably 0.05ml/g or larger, still preferably 0.1ml/g or larger, because polymeric materials can be

5

effectively attached to the in-particle spaces by contact with the particles. The total pore volume is preferably 0.1ml/g or larger, still preferably 0.25ml/g or larger in view of attachability. The average pore diameter is preferably 0.05$\mu$m or larger, still preferably 0.1$\mu$m or larger, because polymeric materials can be easily attached to effective sites to produce the effect of attachment. The average pore diameter is preferably 80$\mu$m or smaller, still preferably 50$\mu$m or smaller in view of effectiveness of attachment. Examples of the apparatus and procedure for Hg porosimetry include the apparatus and procedure described later, in the Examples section.

[Polymeric Material (C-1), (C-2)]

· Method of Measurement and Selections of Solubilities of Polymeric Materials:

In accordance with the present invention, two or more different polymeric materials are used. The selections of the polymeric materials are not particularly limited, although preferably including at least one polymeric material (C-1) having high solubility in a liquid electrolyte in which 1M LiPF$_6$ is dissolved in a mixture of ethylene carbonate (EC) and ethyl methyl carbonate (EMC) (hereinafter also called "reference liquid electrolyte (B)''), and at least one polymeric material (C-2) having low solubility in the reference liquid electrolyte (B).

Herein, the meaning of "different polymeric materials" includes the case where polymeric materials are of the same kind but have distinctly different molecular weights.

The solubilities of polymeric materials are determined according to the following method. A target polymeric material is first dissolved in a good solvent, and then casted onto a substrate that allows peeling, in such a manner that the thickness becomes about 100$\mu$m after drying. After being dried in inert gas, the material is stamped out in a diameter of 12.5mm to produce a sample for evaluation. The sample obtained is then soaked in the reference liquid electrolyte (B), and left standing still in a hermetically sealed vessel under the conditions of normal temperature and normal pressure in an Ar gas atmosphere. The area of the sample is measured after one day and after 90 days, and the ratio of these measured values (the rate of area decrease between the 90th day and the first day) is obtained. If the rate of decrease in area is 3% or higher, the material is determined to be the polymeric material (C-1) having high solubility in the reference liquid electrolyte (B). If the rate of area decrease is lower than 3% (or if the area has increased), the material is determined to be the polymeric material (C-2) having low solubility in the reference liquid electrolyte (B). In accordance with the present invention, the polymeric material (C-1) having high solubility in the reference liquid electrolyte (B) preferably has a rate of area decrease of 4% or higher, while the polymeric material (C-2) having low solubility in the liquid electrolyte preferably has a rate of area decrease of 2.5% or lower.

In accordance with the aforementioned method, the inventors measured some typical polymeric materials, i.e. poly(vinyl alcohol) (PVA), styrene-butadiene-rubber (SBR), carboxymethylcellulose (CMC), poly(vinylidene fluoride) (PVdF), polyacrylonitrile (PAN), and poly(ethylene oxide) (PEO), for their solubilities in the reference liquid electrolyte (B), the results of which measurement is shown in Table 1.

[Table 1]

Table 1

| | PVA | SBR | CMC | PVdF | PAN | PEO |
|---|---|---|---|---|---|---|
| Rate of area decrease (%) (on the 90th day/ on the first day) | 1.0 | 1.4 | 6.2 | 4.1 | 4. 6 | 7.2 |

Examples of the polymeric material (C-1) having high solubility in the reference liquid electrolyte (B) include, in addition to carboxymethylcellulose (CMC), poly(vinylidene fluoride) (PVdF), polyacrylonitrile (PAN), and poly(ethylene oxide) (PEO) listed in Table 1, polystyrene, acrylic ester polymers such as poly(methyl acrylate) and poly(methyl methacrylate) (PMMA), and poly(propylene oxide), as well as their cross-linked products. Among others, poly(vinylidene fluoride), carboxymethylcellulose, poly(ethylene oxide), polyacrylonitrile, and poly (methyl methacrylate) are preferred because of their inexpensiveness and ease of availability.

Examples of the polymeric material (C-2) having low solubility in the reference liquid electrolyte (B) include, in addition to poly(vinyl alcohol) (PVA) and styrene-butadiene-rubber (SBR) listed in Table 1, styrene-isoprene-styrene rubber, acrylonitrile-butadiene rubber, butadiene rubber, ethylene-propylene-diene copolymer, poly(vinyl chloride), polytetrafluoroethylene, polyethylene, polypropylene, isobutylene, polyesters such as polyethylene terephthalate, and nylon, as well as their cross-linked products. Among others, poly (vinyl alcohol) is preferred because of its high flexibility, water solubility under heat, and handleability.

• Properties of Polymeric Materials:

The molecular weights of the polymeric material (C-1) having high solubility and the polymeric material (C-2) having low solubility in the reference liquid electrolyte (B) are difficult to define because they depend on linkages forming polymer chains, the rate of branching, functional groups in each molecular, and the spatial conformation. As a general tendency, however, the smaller the molecular weight of a polymeric material, the higher the solubility of the polymeric material in the reference liquid electrolyte (B). On the other hand, the larger the molecular weight of a polymeric material, the lower the solubility of the polymeric material in the reference liquid electrolyte (B).

• Particle Diameter of Polymeric Materials:

Preferred particle diameters of the polymeric materials (C-1), (C-2) vary depending on the method of attaching these materials to the particles (A). When the polymeric material is attached by wet process, in which the polymeric material is dissolved in a solvent when being attached, the particle diameter of each of the polymeric material (C-1), (C-2) is not particularly limited. On the other hand, when the polymeric material is attached by dry process, in which the polymeric material is attached without the use of any solvent, or the polymeric material is not completely dissolved in a solvent so that a micro crystal domain remains when being attached, the particle size of each of the polymeric materials (C-1), (C-2) counts. Specifically, when dry process is employed for attaching, the particle diameter of each of the polymeric materials (C-1), (C-2) is usually $5\mu m$ or smaller, preferably $0.5\mu m$ or smaller. A polymeric material with too large a particle diameter shows reduced attachability to the particles (A). The preferred limit of the particle diameter mentioned above applies to both the polymeric material (C-1) having high solubility and the polymeric material (C-2) having low solubility in the reference liquid electrolyte (B).

• Mode of Attachment of Polymeric Materials:

The negative-electrode material of the present invention has a structure in which two or more different polymeric materials (C-1), (C-2) are each attached to different sites of the particles (A) which serve as the negative-electrode active material particles. Herein, "each attached to different sites of the particles" means that these polymeric materials (C-1), (C-2) are each attached to different sites of the particles (A) with site selectivity. Whether the polymeric materials (C-1), (C-2) are attached to the particles (A) "with site selectivity" can be determined based on the decrease in the volume of pores with diameters of $1\mu m$ or smaller, which will be described later.
Specifically, the polymeric material (C-1) having high solubility in the reference liquid electrolyte (B) is attached to the interior of pores of the particles (A) (pore site), while the polymeric material (C-2) having low solubility in the reference liquid electrolyte (B) is attached to the exterior of the particles (A) (outer surface site) (negative-electrode active material particles).

· Method of Attaching Polymeric Material (Method of Producing Negative-Electrode Material):

The method of producing the negative-electrode material of the present invention is not limited particularly as long as it can attach the polymeric material (C-1) and the polymeric material (C-2) separately to the particles (A). However, in view of producing the negative-electrode material having the aforementioned structure efficiently with reliability through few steps, it is preferred to adopt a two-stage method (hereinafter also called "the method of production of the present invention") including at least the steps of: first, attaching at least one polymeric material (C-1) having high solubility in the reference liquid electrolyte (B) to the particles (A) in advance (first attachment step); and then, attaching the polymeric material (C-2) having low solubility in the reference liquid electrolyte (B) afterward (second attachment step). The first and second attachment steps need not to be clearly divided but may be carried out successively.
Concrete methods of attachment usable for each of the step of attaching the polymeric material (C-1) to the particles (A) (first attachment step) and the step of attaching the polymeric material (C-2) (second attachment step) include, but are not particularly limited to, the following three examples.

(i) The method in which the particles (A) and the polymeric material (C-1) or (C-2) are simply mixed in the state of particles.
(ii) The method in which the particles (A) and the polymeric material (C-1) or (C-2) are mixed, and then attached or fused by means of mechanical impact.
(iii) The method in which the polymeric material (C-1) or (C-2) is swelled with, or dispersed or dissolved in, a solvent, and attached to the particles (A), followed by drying.

These methods (i) to (iii) may be carried out either singly or in combination of two or more.

In the case of method (i) or (ii), a concrete method of mixing is not particularly limited unless deviating from the gist of the present invention. Specifically, it may be either dry mix or wet mix. Examples of mixers usable for mixing include, but are not particularly limited to, Mechanofusion, Hybridizer, AngMill, Mechano Micros, Micros, jet mill, Hybrid mixer, blender, fluidized-bed granulator, Loedige mixer, spray dryer, and disperser. These mixers may be used either singly or in combination of any two or more.

These concrete methods of mixing can be selected as appropriate, in accordance with the selections of the particles (A) (negative-electrode active material particles) and the polymeric materials (C-1), (C-2). In general, when mechanical dry mixing is carried out with a mixer such as Mechanofusion or Hybridizer, the polymeric material tends to be attached to step site on the surface of the individual negative-electrode active material particle. When wet mixing is carried out, the polymeric material tends to be embedded in the spaces of the individual negative-electrode active material particle. And when mixing is carried out with a powder mixer that exerts weak shear between particles, such as a fluidized bed or Paint Shaker, the polymeric material is probably attached to the surface of the negative-electrode active material particles.

On the other hand, when method (iii) is used, the details of the method are not particularly limited unless deviating from the gist of the present invention. The solvent may be any solvent as long as the polymeric material (C-1) or (C-2) can be dispersed in, swelled with, or dissolved in the solvent, although a solvent that can dissolve the polymeric material is preferred in view of ease of production. Specifically, examples include water, alcohols such as ethanol, and other organic solvents such as benzene, toluene, and xylene, although it is preferred to use water for dissolving, dispersing, or swelling, because of its light environmental loads and low costs for the process. The dissolving, dispersing, or swelling of the polymeric material (C-1) or (C-2) can be carried out by making the polymeric material into contact with the solvent using a mixer/disperser such as disperser or blender. On mixing, whether the liquid is added to the particles or the particles are added to the liquid does not matter. The method of impregnation is not particularly limited as long as it uses an apparatus that can mix a liquid with powder, such as disperser and blender. The condition of mixing can be selected freely, from low solid contents to high solid contents. Alternatively, impregnation can be also carried out by spraying method such as spray drying. Drying methods of these materials include spray drying with spray dryer, shelf drying with heating in a stationary state, a method of drying by applying thermal energy with agitation, and drying under reduced pressures, although any method can be used without limitations as long as it can reduce the content of the solvent.

• Amounts of Polymeric Materials (C-1), (C-2) to Be Attached:

The weight ratio of the polymeric material (C-1) to the particles (A) (the weight of the polymeric material (C-1): the weight of the particles (A)) is within a range of usually 0.01:99.99 or higher, preferably 0.05:99.95 or higher, and usually 10:90 or lower, especially 2: 98 or lower. Excessively low rates of the polymeric material (C-1) are not preferable because the polymeric material (C-1) may not be attached into the pores in such an adequate amount as to improve discharge characteristic with high densities. On the other hand, excessively high rates of the polymeric material (C-1) are also not preferable because reversible capacity may decrease.

The weight ratio of the polymeric material (C-2) to the particles (A) (the weight of the polymeric material (C-2): the weight of the particles (A)) is within a range of usually 0.005:99.995 or higher, preferably 0.01:99.99 or higher, and usually 5:95 or lower, especially 1:99 or lower. Excessively low rates of the polymeric material (C-2) are not preferable because little effect can be obtained on reducing initial irreversible capacity. On the other hand, excessively high rates of the polymeric material (C-1) are also not preferable because discharge characteristic under high current densities may decline.

The weight ratio between the polymeric material (C-1) having high solubility and the polymeric material (C-2) having low solubility in the liquid electrolyte (the weight of the polymeric material (C-1): the weight of the polymeric material (C-2)) is within a range of usually 1:1 or higher, and usually 1000:1 or lower, preferably 100:1 or lower. Excessively low rates of the polymeric material (C-1) are not preferable because discharge characteristic under high current densities may decline. On the other hand, excessively low rates of the polymeric material (C-2) are also not preferable because initial charge-discharge efficiency may decrease.

[Cross-Linking Agent and Others]

In addition to the aforementioned particles (A) and polymeric materials (C-1), (C-2), the negative-electrode material of the present invention may include a cross-linking agent. A cross-linking agent forms linkages between some of the functional groups of side chains and main chains in the polymeric material (C-2) having low solubility in the reference liquid electrolyte (B) and develops network structure in the polymeric material (C-2), enabling alteration of the molecular weight after attachment. This effect contributes the functions of increasing resistance to the liquid electrolyte and thereby improving initial charge-discharge efficiency. The cross-linking agent is not particularly limited but can be selected appropriately in accordance with the selection of the polymeric material (C-2) used together. Specifically, when poly(vinyl alcohol) is used as the polymeric material (C-2), preferred examples of cross-linking agents include glyoxasal, organic metal complexes of, e.g., Ti and Zr, and their derivatives. The selections of cross-linking agents are not limited to these examples; other cross-linking agents can be used depending on the functional groups the polymeric material (C-2) has. The cross-linking agents may be used either singly or in combination of any two or more at any ratios.

[Others]

The mechanism by which the present invention can achieve the advantageous effects is not clear but can be supposed as follows.

In a negative-electrode active material, hollows (step planes in the case of a carbon material) and pores (edge planes in the case of a carbon material) on the surface supposedly serve as active areas allowing passage of Li. According to the conventional methods, in which a binder having low solubility in a solvent used for negative-electrode production is attached first, the binder having low solubility in the solvent used for negative-electrode production enters these hollows and pores to hinder smooth intercalation and deintercalation of Li.

In contrast, the preferred mode of attachment of the present invention, the aforementioned polymeric material (C-1) having high solubility in the reference liquid electrolyte (B) enter the hollows and pores of the particles (A) being the negative-electrode active material particles, and the polymeric material (C-2) having low solubility in the reference liquid electrolyte (B) cover the surface of the particles (A). This prevents the negative-electrode active material from being in direct contact with and coated with a binder during electrode production. In addition, when used in battery production, the active areas allowing passage of Li can be in contact with the liquid electrolyte through the medium of the polymeric material (C-1) having high solubility in the liquid electrolyte. This supposedly makes possible to improve charge-discharge characteristic under high current densities. Besides, the polymeric material (C-2) having low solubility in the liquid electrolyte is attached, with site selectivity, to basal planes, which are not involved in passage of Li and can become a cause of a decline in initial efficiency. This supposedly makes also possible to improve initial charge-discharge efficiency.

Additionally, contrasted with the conventional methods in which the binder enters the hollows and pores of the negative-electrode active material particles, the binder stays outside the negative-electrode active material particles and serves its original purpose of binding between the active material particles. This supposedly makes possible to increase the strength of the negative electrode.

Thus, each of the two layers of polymeric materials (C-1) (C-2) attached to the negative-electrode active material particles, i.e. the particles (A), has a different function and acts at a limited site. It is therefore important to locate the site at which each of the polymeric materials (C-1), (C-2) is attached. An example of the method to estimate the site of attachment is the method employing Hg porosimetry.

Specifically, it is desired that when the polymeric material (C-1) of the first layer (the layer having high solubility in the liquid electrolyte) has been attached to the particles (A), the volume of pores whose diameters are $1\mu m$ or smaller decreases by a rate of usually 5% or higher, especially 15% or higher as compared with the pore volume of the particles (A) alone. This translates into that the polymeric material (C-1) has been attached in such a manner as to be in contact with the pores corresponding to the decrease in pore volume among the pores of the particles (A) whose pore diameters are $1\mu m$ or smaller. If the rate of reduction in pore volume is within the range, the polymeric material (C-1) having high solubility in the liquid electrolyte has presumably entered hollows and pores of the particles (A) to an effectual degree. Before the polymeric material (C-1) is attached, the volume of pores of $1\mu m$ or smaller that the particles (A) have is within a range of usually 0.01mL/g or larger, preferably 0.04mL/g or larger, and usually 10mL/g or smaller, preferably 0.5mL/g or smaller.

In addition to this, it is preferred that a decrease occurs in the specific surface area measured in accordance with the BET method. Specifically, as compared with the BET specific surface area of the particles (A) before the polymeric material (C-1) is attached, the BET specific surface area preferably decreases by a rate of usually 10% or higher, especially 25% or higher after the polymeric material (C-1) has been attached. Before the polymeric material (C-1) is attached, the absolute value of the specific surface area of the particles (A) according to the BET method is within a range of usually $1m^2/g$ or larger, preferably $2m^2/g$ or larger, and usually $20m^2/g$ or smaller, preferably $10m^2/g$ or smaller.

Also, when the polymeric material (C-2) of the second layer (the layer having low solubility in the liquid electrolyte) has been attached, variations in pore distribution are preferably 2% or lower, and fluctuations in BET specific surface area are lower than 10%, as compared with the state where the polymeric material (C-1) of the first layer (the layer having high solubility in the liquid electrolyte) has been attached.

[Mixing with Other Carbon Materials]

The aforementioned negative-electrode material of the present invention may be suitably used as a negative-electrode material for a lithium secondary battery, either any one singly or in combination of any two or more at any ratios. Alternatively, a mixture of one or a plurality of the aforementioned negative-electrode material of the present invention (hereinafter also called "negative-electrode material (D)") with one or more other carbon materials (E) may be used as a negative-electrode material for a lithium secondary battery.

When the aforementioned negative-electrode material (D) is mixed with a carbon material (E), the mixture rate of the carbonmaterial (D) tothetotalamountofthenegative-electrode material (D) and the carbon material (E) is within a range of usually 10 weight % or higher, preferably 20 weight % or higher, and usually 90 weight % or lower, preferably 80 weight % or lower. Mixture rates of the carbon material (E) below the aforementioned range are not preferable because the attachment may produce little effect. On the other hand, mixture rates exceeding the aforementioned range are also not preferable because the characteristics of the negative-electrode material (D) may be impaired.

The carbon material (E) to be used is a material selected from the group consisting of natural graphite, artificial graphite, amorphous-material-covered graphite, and amorphous carbon. These materials may be used any one singly, or any two or more in combination at any ratios.

Examples of natural graphite include purified flaky graphite and spherical graphite. The volume-based average diameter of the natural graphite is within a range of usually $8\mu m$ or larger, preferably $12\mu m$ or larger, and usually $60\mu m$ or smaller, preferably $40\mu m$ or smaller. The BET specific surface area of the natural graphite is within a range of usually $3.5m^2/g$ or larger, preferably, $4.5m^2/g$ or larger, and usually $8m^2/g$ or smaller, preferably $6m^2/g$ or smaller.

Artificial graphite is, e.g., graphitized particles of carbon material. Examples include particles obtained by calcinating and graphitizing particles of a single graphite precursor with keeping its state of powder.

Examples of amorphous-material-covered graphite include: particles obtained by covering natural graphite or artificial graphite with an amorphous precursor, followed by calcination; and particles obtained by covering natural graphite or artificial graphite with an amorphous material by means of CVD.

Examples of amorphous carbon include: particles obtained through calcination of bulk mesophase; and particles obtained through infusiblization and calcination of a carbon precursor.

The apparatus used for mixing the negative-electrode material (D) with the carbon material (E) is not limited particularly, examples of which apparatus include: rolling mixers such as a cylinder mixer, a twin-cylinder mixer, a double-cone mixer, a cube mixer, and a hoe mixer; and stationary mixers such as a spiral mixer, a ribbon mixer, a Muller mixer, a helical-flight mixer, a Pugmill mixer, and a fluidized mixer.

On producing a negative electrode for a lithium secondary battery employing the negative-electrode material of the present invention (hereinafter, the term "the negative-electrode material of the present invention" means both the case where the negative-electrode material (D) is used alone and the case where the negative-electrode material (D) is mixed with one or more other carbon materials (E), unless otherwise specified) explained above, the selections of a method and other materials are not particularly limited. Also, on producing a lithium secondary battery using the negative electrode, there are no particular limitations on the selections of structural components required for composing a lithium secondary battery, such as a positive electrode and a liquid electrolyte. The following explanation will be made in details on examples of a negative electrode for a lithium secondary battery and a lithium secondary battery each employing the negative-electrode material of the present invention, although materials and methods of production which can be used are not limited to the following examples.

[2. Negative Electrode for Lithium Secondary Battery]

The negative electrode for a lithium secondary battery in accordance with the present invention (hereinafter called "the negative electrode of the present invention") includes a current collector and an active-material layer formed on a current collector, and is characterized in that the active-material layer includes a.binder and the negative-electrode material of the present invention.

A binder to be used should have olefinic unsaturated bonds in its molecules. Examples of such a binder include, but are not limited to, styrene-butadiene-rubber, styrene-isoprene-styrene rubber, acrylonitrile-butadiene rubber, butadiene rubber, and ethylene-propylene-diene copolymer. The use of a binder with olefinic unsaturated bonds reduces swelling of the active-material layer with a liquid electrolyte. Among others, styrene-butadiene-rubber is preferred in view of ease of availability.

The combined use of a binder with olefinic unsaturated bonds and the aforementioned active material can increase the strength of the negative electrode. Increases in the strength of the negative electrode serve to prevent the negative electrode from deteriorating through charge and discharge and to prolong cycle life. Besides, since the active-material layer is bonded to the current collector with high bond strength in the negative electrode of the present invention, even if the amount of binder in the active-material layer is decreased, the active-material layer is supposedly protected from peeling off from the current collector when the negative electrode is winded in the production of a battery.

The binder with olefinic unsaturated bonds in its molecules is preferred either to have a large molecular weight or a high content of unsaturated bonds. Specifically, when the binder has a large molecular weight, the molecular weight is preferably within a range of usually ten thousands or larger, preferably fifty thousands or larger, and usually one million or smaller, preferably three hundreds of thousands or smaller. On the other hand, when the binder has a high content of unsaturated bonds, the number of moles of olefinic unsaturated bonds per gram of whole binder is preferably within a range of usually $2.5 \times 10^{-7}$ or higher, preferably $8 \times 10^{-7}$ or higher, and usually $1 \times 10^{-4}$ or lower, preferably $5 \times 10^{-6}$ or lower. The binder may satisfy at least either the requirement about molecular weight or the requirement about unsaturated-bond content, although it should preferably meet both the requirements. Excessively low molecular weights of the binder with olefinic unsaturated bonds bring about decreases in mechanical strength, while excessively high molecular weights bring about decreases in flexibility. Excessively low contents of olefinic unsaturated bonds in the binder lessen the effect of improving the strength, while excessively high contents bring about decreases in flexibility.

Besides, the binder with olefinic unsaturated bonds preferably has a degree of unsaturation of within a range of usually 15% or higher, preferably 20% or higher, more preferably 40% or higher, and usually 90% or lower, preferably 80% or lower. Herein, the degree of unsaturation means the ratio of double bonds per repeating unit of the polymer (%).

In the present invention, a binder having no olefinic unsaturated bonds may also be used in combination with the aforementioned binder with olefinic unsaturated bonds within such an amount as not to ruin the effects of the present invention. The mixture ratio of the binder without olefinic unsaturated bonds to the binder with olefinic unsaturated bonds is usually 150 weight % or lower, preferably 120 weight % or lower. The combined use of a binder without olefinic unsaturated bonds serves to improve coatability, although the use in excessively large amounts may lessen the strength of the active-material layer.

Examples of the binder without olefinic unsaturated bonds are: thickening polysaccharides such as methyl cellulose, carboxymethylcellulose, starch, carrageenan, pullulan, guar gum, and xanthan gum; polyethers such as poly (ethylene oxide) and poly(propylene oxide); vinyl alcohols such as poly(vinyl alcohol) and poly(vinyl butyral); polyacids such as poly (acrylic acid) and poly (methacrylic acid) ; metal salts of these polymers; fluorine-containing polymers such as poly (vinylidene fluoride) ; alkane polymers such as polyethylene and polypropylene; and copolymers of these polymers.

According to the present invention, the combined use of the negative-electrode material of the present invention, in which two or more kinds of polymeric materials (C-1), (C-2) are attached to the particles (A), with the aforementioned binder with olefinic unsaturated bonds allows reductions in the ratio of a binder in the active-material layer, as compared with the conventional methods. Specifically, the weight ratio between the negative-electrode material of the present invention and the binder (this may be a combination of a binder with unsaturated bonds and a binder without unsaturated bonds, as explained above) is, as the ratio between their dry weights, within a range of usually 90/10 or higher, preferably 95/5 or higher, and usually 99.9/0.1 or lower, preferably 99.5/0.5 or lower, still preferably 99/1 or lower. Excessively high ratios of the binder tend to bring about reductions in capacity and increases in resistance, while excessively low ratios of the binder lessen the electrode-mechanical strength.

The negative electrode of the present invention is formed by dispersing the aforementioned negative-electrode material of the present invention and the binder in a dispersion medium to form slurry, and then applying the slurry onto a current collector. Examples of the dispersion medium to be used include organic solvents, such as alcohols, and water. The slurry may also contain a conductant agent as necessary. Examples of the conductant agent are carbon blacks, such as acetylene black, ketjen black, and furnace black, and fine powders of Cu, Ni and/or their alloys having an average particle diameter of $1 \mu m$ or smaller. The amount of conductant agent is usually about 10 weight % or lower, relative to the negative-electrode material of the present invention.

The current collector onto which the slurry is applied may be any known current collector. Examples are metal films such as rolled copper foil, electrolytic copper foil, and stainless steel foil. The thickness of the current collector is usually $5 \mu m$ or larger, preferably $9 \mu m$ or larger, and usually $30 \mu m$ or smaller, preferably $20 \mu m$ or smaller.

The slurry applied onto the current collector is then dried under a dry air or inert atmosphere at a temperature of usually 60°C or higher, preferably 80°C or higher, and usually 200°C or lower, preferably 195°C or lower, to form the active-material layer.

The thickness of the active-material layer obtained through application and drying of the slurry is usually $5 \mu m$ or larger, preferably $20 \mu m$ or larger, still preferably $30 \mu m$ or larger, and usually $200 \mu m$ or smaller, preferably $100 \mu m$ or smaller, still preferably $75 \mu m$ or smaller. Excessively small thicknesses of the active-material layer may impair practicality as the negative electrode in relation to the particle diameter of the active material, while excessively large thicknesses make it difficult to serve the function of intercalating and deintercalating Li sufficiently with high density current values.

[3. Lithium Secondary Battery]

The lithium secondary battery of the present invention has a basic constitution in common with the conventional lithium secondary batteries: it usually includes positive and negative electrodes capable of intercalating and deintercalating lithium ions and an electrolyte, and the aforementioned negative electrode of the present invention is used as the negative electrode.

The positive electrode has a positive-electrode active-material layer, which is formed on a current collector and includes a positive-electrode active material and a binder.

Examples of the positive-electrode active material are metal chalcogen compounds capable of intercalating and deintercalating alkaline metal cation such as lithium ions during charge and discharge. Metal chalcogen compounds include: transition metal oxides such as vanadium oxide, molybdenum oxide, manganese oxide, chromium oxide, titanium oxide, and tungsten oxide; transition metal sulfides such as vanadium sulfide, molybdenum sulfide, titanium sulfide, and $CuS$; phosphorus-sulfur compounds containing transition metal such as $FePS_3$ and $NiPS_3$; selenium compounds containing transition metal such as $VSe_2$ and $NbSe_3$; composite oxides containing transition metal such as $Fe_{0.25}V_{0.75}S_2$, and $Na_{0.1}CrS_2$, composite sulfides containing transition metal such as $LiCoS_2$ and $LiNiS_2$.

Preferable among those are $V_2O_5$, $V_5O_{13}$, $VO_2$, $Cr_2O_5$, $MnO_2$, $TiO$, $MoV_2O_8$, $LiCoO_2$, $LiNiO_2$, $LiMn_2O_4$, $TiS_2$, $V_2S_5$, $Cr_{0.25}V_{0.75}S_2$, and $Cr_{0.5}V_{0.5}S_2$. Especially preferable are: $LiCoO_2$, $LiNiO_2$, and $LiMn_2O_4$; and lithium-transition metal composite oxides obtained by replacing part of transition metals in these materials with other metals. These positive-electrode active materials may be used either singly or as a mixture of two or more.

The binder for binding the positive-electrode active material can be selected freely from known binders. Examples include inorganic compounds, such as silicate and water glass, and resins having no unsaturated bonds, such as Teflon (registered trademark) and poly(vinylidene fluoride). Preferable among others are resins without unsaturated bonds. The use of a resin having unsaturated bonds as the resin for binding the positive-electrode active material may bring about decomposition through oxidation reaction. The weight-average molecular weights of these resins should be within a range of usually 10 thousands or larger, preferably 100 thousands or larger, and usually 3000 thousands or smaller, preferably 1000 thousands or smaller.

The positive-electrode active-material layer may contain a conductant agent in view of improving the conductivity of the electrode. The conductant agent is not particularly limited as long as it can impart conductivity to the active material by addition of proper amounts. Examples include carbon powders, such as acetylene black, carbon black, and graphite, and fibers, powders, and foils of various metals.

The positive electrode is formed in a method similar to the aforementioned method of forming the negative electrode, i.e. by making the positive-electrode active material and the binder into slurry with a medium, and then applying the slurry onto a current collector, followed by drying. Examples of the current collector for the positive electrode include, but not limited to, aluminum, nickel, and SUS.

Examples of the electrolyte are nonaqueous liquid electrolytes, obtained by dissolving lithium salts in nonaqueous solvents, as well as gel, rubber, and solid-sheet products made from these nonaqueous liquid electrolytes using organic polymer compounds.

The nonaqueous solvent used for the nonaqueous liquid electrolyte is not limited, and can be selected appropriately from known nonaqueous solvents conventionally proposed as solvents for nonaqueous liquid electrolytes. Examples are: chain carbonates such as ethylene carbonate, diethyl carbonate, dimethyl carbonate, and ethyl methyl carbonate; cyclic carbonates such as ethylene carbonate, propylene carbonate, and butylene carbonate; chain ethers such as 1,2-dimethoxyethane; cyclic ethers such as tetrahydrofuran, 2-methyl tetrahydrofuran, sulfolane, and 1,3-dioxolane; chain esters such as methyl formate, methyl acetate, and methyl propionate; and cyclic esters such as γ-butyrolactone and γ-valerolactone. These nonaqueous solvents may be used either any one singly or in combination of any two or more, although a mixture solvent including a combination of a cyclic carbonate and a chain carbonate is preferable.

The lithium salt used for the nonaqueous liquid electrolyte is not limited, and can be selected appropriately from known lithium salts that can be used for the purpose. Examples are: inorganic lithium salts including halides such as $LiCl$ and $LiBr$, perhalide salts such as $LiClO_4$, $LiBrO_4$, and $LiClO_4$, and inorganic fluoride salts such as $LiPF_6$, $LiBF_4$, and $LiAsF_6$; and fluorine-containing organic lithium salts including perfluoroalkane sulfonate salts such as $LiCF_3SO_3$ and $LiC_4F_9SO_3$, and perfluoroalkane sulfonate imide salts such as Li trifluorosulfone imide $((CF_3SO_2)_2NLi)$. These lithium salts may be used either singly or as a mixture of two or more. The content of the lithium salt in the nonaqueous liquid electrolyte is within a range of usually 0.5M or higher and 2.0M or lower.

On the other hand, when the aforementioned nonaqueous liquid electrolyte is impregnated into an organic polymer compound to be made into the form of gel, rubber, or solid sheet, examples of the organic polymer compound include: polyether polymers such as poly(ethylene oxide) and poly(propylene oxide) ; cross-linked products of the polyether polymers; vinyl alcohol polymers such as poly(vinyl alcohol) and poly(vinyl butyral) ; insolubilized products of the vinyl alcohol polymers; polyepichlorohydrin; polyphosphazene; polysiloxane; vinyl polymers such as polyvinylpyrrolidone, poly(vinylidene carbonate), and polyacrylonitrile; and copolymers such as poly[(ω-methoxy)oligo(oxyethylene)methacrylate], poly[(ω-methoxy)oligo(oxyethylene)methacrylate-co-methyl methacrylate], and poly(hexafluoropropylene-vinylidene fluoride).

The aforementioned nonaqueous liquid electrolyte may further contain a film forming agent. Examples of the film forming agent are: carbonate compounds such as vinylene carbonate, vinyl ethyl carbonate, and methyl phenyl carbonate; alkene sulfides such as ethylene sulfide and propylene sulfide; sultone compounds such as 1,3-propane sultone and 1,4-butane sultone; and acid anhydrides such as maleic anhydride and succinic anhydride. The content of the film forming agent, if used, is preferably 10 weight % or lower, further preferably 8 weight % or lower, still further preferably 5 weight % or lower, especially preferably 2 weight % or lower. Excessively' large contents of film forming agent may produce adverse effects on other battery characteristics, e.g. increases in initial irreversible capacity and declines in low-temperature characteristics and rate characteristics.

Alternatively, the electrolyte may also be a solid polymer electrolyte, which is a conductor of alkaline metal cations such as lithium ions. Examples of the polymer solid electrolyte are products in which Li salts are dissolved in the polyether polymers, and polymers in which terminal hydroxyl groups of polyethers are replaced with alkoxide.

A porous separator such as porous membrane or non-woven fabric is usually interposed between the positive electrode and the negative electrode in order to prevent shortings between the electrodes. In this case, the nonaqueous liquid electrolyte is impregnated in the porous separator. Materials for the separator are polyolefins, such as polyethylene and polypropylene, and poly(ether sulfone), being preferably polyolefin.

The structure of the lithium secondary battery of the present invention is not particularly limited. Examples include: cylinder type, in which sheet electrodes and a separator are made in the form of spirals; inside-out cylinder type, in which pellet electrodes and a separator are combined; and coin type, in which pellet electrodes and a separator are layered. The battery also may be contained in any case in a desired shape such as a coin, cylinder, or prismatic shape.

The procedure for assembling the lithium secondary battery of the present invention is not limited, and may be any proper procedure depending on the structure of the battery. Example of the procedure includes: disposing the negative electrode into an outer case; disposing the liquid electrolyte and the separator on the negative electrode; disposing the positive electrode in such a position that the positive electrode faces the negative electrode; and caulking the outer case together with a gasket and a sealing pad.

[Examples]

Next, the present invention will be explained in further detail by means of Examples. However, the present invention should by no means be limited by these Examples, unless departing from the gist of the invention.

<Example 1>

2g of poly (vinylidene fluoride) (W#1300 manufactured by Kureha Corporation) as a polymeric material (C-1) was dissolved in 198g of 1-methyl-2-pyrrolidone. The solution was combined with 200g of spherical natural graphite particles with a specific surface area of $6.4m^2/g$ and an average particle diameter of $16\mu m$ as particles (A) (negative-electrode active material particles), and mixed for two hours in a 0.75L-volume vessel of stainless steel with agitation by means of homo-disperser. The mixture obtained was then settled in a stainless steel vat so as to be 1.5cm in height, and dried in $N_2$ gas at 110°C for ten hours. The dried product was then sieved and used as negative-electrode active material particles with a polymeric material attached in a single layer. Meanwhile, 0.2g of poly(vinyl alcohol) (NM14 manufactured by Synthetic Chemical Industry Co.,Ltd) as a polymeric material (C-2) was dissolved in 199.8g of pure water heated at 70°C, and then air-cooled to 25°C. The solution was combined with 200g of the aforementioned negative-electrode active material particles with single-layer polymeric material, and mixed for two hours with agitation by means of homo-disperser. The mixture obtained was then settled in a stainless-steel vat so as to be 1.5cm in height, and dried in $N_2$ gas at 110°C for ten hours. The dried product was then sieved and used as negative-electrode active material particles with polymeric materials attached in two layers. The material is called the negative-electrode material of Example 1.

<Example 2>

2g of carboxymethylcellulose (BSH6 manufactured by Dai-Ichi Kogyo Seiyaku Co. , Ltd.) as a polymeric material (C-1) was dissolved in 198g of pure water. The solution was combined with 200g of the graphite particles used in Example 1 as particles (A) (negative-electrode active material particles), and mixed for two hours in a 0.75L-volume vessel of SUS with agitation by means of homo-disperser. The rest of the procedure was carried out in a like manner as in Example 1 to obtain negative-electrode active material particles with polymeric materials attached in two layers. The material is called the negative-electrode material of Example 2.

<Example 3>

2g of poly(methyl methacrylate) (methyl methacrylate polymer manufactured by Wako Pure Chemical Industries, Ltd.) as a polymeric material (C-1) was dissolved in 198g of acetone. The solution was combined with 200g of the graphite particles used in Example 1 as particles (A) (negative-electrode active material particles), and mixed for two hours in a 0.75L-volume vessel of SUS with agitation by means of homo-disperser. The rest of the procedure was carried out in a like manner as in Example 1 to obtain negative-electrode active material particles with polymeric materials attached in two layers. The material is called the negative-electrode material of Example 3.

<Example 4>

2g of poly(ethylene oxide) (poly(ethylene glycol) 20000 manufactured by Wako Pure Chemical Industries, Ltd.) as a polymeric material (C-1) was dissolved in 198g of pure water. The solution was combined with 200g of the graphite particles used in Example 1 as particles (A) (negative-electrode active material particles), and mixed for two hours in a 0. 75L-volume vessel of SUS with agitation by means of homo-disperser. The rest of the procedure was carried out in a like manner as in Example 1 to obtain negative-electrode active material particles with polymeric materials attached in two layers. The material is called the negative-electrode material of Example 4.

<Example 5>

2g of carboxymethylcellulose (BSH6 manufactured by Dai-Ichi Kogyo Seiyaku Co. , Ltd.) as a polymeric material (C-1) was dissolved in 198g of pure water. The solution was combined with 200g of the graphite particles used in Example 1 as particles (A) (negative-electrode active material particles) and 0.02g of Sequarez 755 (manufactured by OMNOVA Solutions Inc.) as a cross-linking agent, and mixed for two hours in a 0. 75L-volume vessel of SUS with agitation by means of homo-disperser. The rest of the procedure was carried out in a like manner as in Example 1 to obtain negative-electrode active material particles with polymeric materials attached in two layers. The material is called the negative-electrode material of Example 5.

<Comparative Example 1>

The procedure was carried out in a like manner as in Example 1, except that the process of attaching the polymeric material (C-2) was omitted, to obtain negative-electrode active material particles with a polymeric material attached in a single layer. The material is called the negative-electrode material of Comparative Example 1.

 <Comparative Example 2>

The graphite particles used in Example 1 (negative-electrode active material particles without any polymeric material attached) were used as a negative-electrode material without being processed. The material is called the negative-electrode material of Comparative Example 2.

<Comparative Example 3>

2g of carboxymethylcellulose (BSH6 manufactured by Dai-Ichi Kogyo Seiyaku Co. , Ltd.) as a polymeric material (C-1) and 0. 2g of poly (vinyl alcohol) (NM14 manufactured by Synthetic Chemical Industry Co., Ltd.) as a polymeric material (C-2) were dissolve in 197.8g of pure water heated at 70°C, and then air-cooled to 25°C. The mixture solution was combined with 200g of the graphite particles used in Example 1 as particles (A) (negative-electrode active material particles), and mixed for two hours in a 0.75L-volume vessel of SUS with agitation by means of homo-disperser. Thus, these polymeric materials were attached simultaneously. The rest of the procedure was carried out in a like manner as in Example 1 to obtain negative-electrode active material particles to which two polymeric materials were attached simultaneously. The material is called the negative-electrode material of Comparative Example 3.

<Evaluation for Properties of Negative-Electrode Active Materials>

The negative-electrode materials of Examples 1 to 5 and Comparative Examples 1 to 3 were measured for rates of decrease of pores whose diameters were $1\mu$m or smaller, by Hg porosimetry according to the following procedure. Also, the materials were measured for specific surface areas by BET method according to the following procedure. These results are shown in Table 2.

<Hg Porosimetry>

A mercury porosimeter (AutoPore 9520: manufactured by Micromeritics GmbH) was used as an apparatus for Hg porosimetry. A sample (negative-electrode material) was weighed out about 0.2g and enclosed in a powder cell, and deaerated for ten minutes at room temperature in a vacuum ($50\mu$mHg or lower) as a pretreatment. After the pressure was restored to 4psia (about 28kPa), mercury was introduced, and the pressure was raised from 4psia (about 28kPa) to 40000psia (about 280MPa), and then reduced to 25psia (about 170kPa). During that period, measurement procedure was carried out at 80 points or more, in which procedure the amount of mercury was measured after equilibrium time of ten seconds. Based on the mercury injection curve thus obtained, the pore distribution was determined in accordance with Washburn's equation, assuming that the surface tension ($\gamma$) of mercury is 485dyne/cm and that the contact angle ($\psi$) of mercury is 140°.

<BET Method>

BET specific surface areas were measured by means of an automatic surface-area measurement apparatus (AMS8000: manufactured by Ohkura Riken Inc.) in accordance with BET one-point method (nitrogen gas adsorption). A sample (negative-electrode material) was precisely weighed out about 0. 8g, put in a specially designed cell and placed in the apparatus. The sample was then heated at 100°C and exposed to the flow of gas for measurement (nitrogen 30%, helium balance) as pretreatment for 30 minutes. After the completion of the pretreatment, the cell was cooled to liquid-nitrogen temperature, and the gas was saturated for adsorption. The sample was subsequently heated to room temperature, and the amount of gas desorbed was measured by means of TCD. Based on the amount of gas obtained and the sample weight after measurement, the specific surface area was determined in accordance with BET one-point method.

<Negative Electrode Production>

Each of the negative-electrode materials of Examples 1 to 5 and Comparative Examples 1 to 3 was combined with 10g of aqueous dispersion of carboxymethylcellulose (the content of carboxymethylcellulose was 1 weight %) and 0.2g of aqueous dispersion of styrene-butadiene-rubber with a degree of unsaturation of 75% (the content of styrene-butadiene-rubber was 50 weight %, the molecular weight of styrene-butadiene-rubber was 120 thousands) as binders, and mixed by means of a high-speed mixer to produce slurry. The slurry was applied onto a copper foil (current collector) by doctor blade method, dried, and pressed in linear densities of 20 to 300kg/cm with a roll press to form an active-material layer. After drying and pressing, the active-material layer had a weight of 10mg/cm$^2$ and a density of 1.6g/ml, and the average electrode thickness was 68$\mu$m. The negative electrodes (negative electrodes for a lithium secondary battery) produced according to the aforementioned procedure were called the negative electrodes of Examples 1 to 5 and Comparative Examples 1 to 3, respectively.

The negative electrodes of Examples 1 to 5 and Comparative Examples 1 to 3 were measured for electrode-mechanical strength, immersion rate, initial charge-discharge efficiency, charge-discharge characteristic under high current densities, and cycle retention ratio (the negative electrode of Comparative Example 3 was measured only for initial charge-discharge efficiency and charge-discharge characteristic under high current densities). The results were shown in Table 2.

<Evaluation for Electrode-Mechanical Strength >

The negative electrodes were measured for scratch resistance with a continuous weighting type of scratch resistance tester (manufactured by Shinto Scientific Co. , Ltd.) and a diamond indenter tip (with a point angle of 90 degrees and a point R of 0.1 mm) . Scrapes on the electrode were judged by precisely measuring the distance between the point at which the indenter tip touched the active-material layer and the point at which the copper foil, i.e. the current collector, was visually recognized, and detecting the load (g) applied on the indenter tip at the point of time. The measurement was carried out five times, and the strength of the negative electrode was evaluated based on the average of the five measurement values.

<Evaluation for Immersion Rate>

The negative electrode produced according to the <Negative Electrode Production> section was stamped into a disc with a diameter of 12.5mm, and dried at 110°C under a reduced pressure to produce a sample for measurement. The sample was held horizontally, and 1$\mu$l of propylene carbonate was dropped onto the sample with a microsyringe. The time elapsed since the dropping until the droplet disappeared was measured based on visual observations, and the immersibility was evaluated

according to the length of the time.

<Evaluation for Initial Battery Characteristics and Charge-Discharge Characteristics under High Current Densities>

100 weight parts of the negative-electrode active material was combined with 2 weight parts of an aqueous dispersion containing 50% of styrene-butadiene-rubber and 100 weight parts of aqueous solution containing 1% of carboxymethylcellulose, and blended to produce slurry. The slurry was applied onto a copper foil by doctor blade method, dried at 110°C, and then consolidated with a roll press so that the resultant negative electrode layer had a thickness of 65μm and a density of 1. 63g/ml. The product was then stamped in a disc with a diameter of 12. 5mm, and dried at 190°C under a reduced pressure to produce a negative electrode. The negative electrode was layered with a lithium metal plate (counter electrode of 0.5mm in thickness and 14 in diameter) while a separator impregnated with the reference liquid electrolyte (B) was interposed between the electrodes to produce a half cell for charge-discharge test. The half cell was charged with a current of 0.2mA until the voltage reached 0.01V (Li/Li$^+$) (=intercalation of lithium ions to the negative electrode), then charged with keeping the voltage until the current capacity per gramof the negative electrode layer reached 350mAhr, and discharged with a current of 0.4mA until the voltage reached 1.5V, and the difference between the charge amount and the discharge amount was obtained as irreversible capacity. Subsequently, the half cell was charged with a current of 0.2mA until the voltage reached 0.005V, then charged under 0.005V until the current reached 0.02mA, and discharged with a current of 0.4mA until the voltage reached 1. 5V. This charge-discharge cycle was repeated twice. The discharge amount obtained in the second cycle was obtained as discharge capacity. Next, half cell was charged with a current of 0.2mA to 0.005V, then charged under 0.005V until the current reached 0.02mA, and discharged with a current corresponding to 0. 2C until the voltage reached 1.0V. The discharge amount thus obtained was determined to be a 0.2C discharge capacity. Subsequently, the half cell was charged with a current of 0.2mA until the voltage reached 0.005V, then charged under 0.005V until the current reached 0. 02mA, and discharged with a current corresponding to 2C until the voltage reached 1.0V. The discharge amount thus obtained was determined to be a 2C discharge capacity. The discharge characteristic under high current densities was calculated in accordance with the following equation.

```
Discharge Characteristic under High Current Densities (%)

     = 2C Discharge Capacity / 0.2C Discharge Capacity
```

<Evaluation of Cycle Characteristics>

100weightpartsofthenegative-electrodeactivematerial was combined with 2 weight parts of aqueous dispersion containing 50% of polyethylene and 140 weight parts of aqueous solution containing 1% of carboxymethylcellulose, and blended to produce slurry. The slurry was applied onto a copper foil by doctor blade method, dried at 110°C, and consolidated with a roll press so that the resultant negative electrode layer has a density of 1.6g/cm$^3$. The product was cut into test pieces of 42mm in length and 32m in width, which were then dried at 140°C and used as negative electrodes.
Meanwhile, 100 weight parts of LiCoO$_2$ was combined with 10 weight parts of aqueous dispersion containing 50% of polytetrafluoroethylene, 40 weight parts of aqueous dispersion containing 1% of carboxymethylcellulose, and 3 weight parts of carbon black, and blended to produce slurry. The slurry was applied onto both faces of an aluminum foil by doctor blade method, dried at 110°C, and consolidated with a roll press so that the layer has a density of 3.5g/cm$^3$. The product was cut into a test piece of 40mm in length and 30mm in width, which was then dried at 140°C and used as a positive electrode.
The negative electrodes were overlaid on both faces of the positive electrode while polyethylene separators impregnated with the reference liquid electrolyte (B) were interposed between the positive electrode and the negative electrodes to produce a cell for cycle test. The cell was first charged with 0.2C until it reached 4.2V, then charged under 4.2V until it reached 4mA, and discharged with 0.2C until it reached 3.0V as preliminary charge and discharge. Subsequently, the cell was charged with 0. 7C until it reached 4.2V, then charged under 4.2V until it reached 4mA, and discharged with 1C until it reached 3.0V. This charge-discharge cycle was repeated 201 times. The ratio of the discharge capacity in the first cycle to the discharge capacity in the 201st cycle was calculated and determined to be a cycle retention ratio.
.

[Table 2]

Table 2

|  | Example 1 | Example 2 | Example 3 | Example 4 | Example 5 |
|---|---|---|---|---|---|
| Rate of decrease of pores of 1µm or smaller (%) | 20 | 28 | 23 | 25 | 21 |
| BET specific surface area ($m^2/g$) | 4.5 | 4.0 | 4.2 | 4.3 | 4.2 |
| Electrode-mechanical strength (g) | 85 | 85 | 83 | 82 | 87 |
| Immersibility (sec) | 47 | 42 | 48 | 49 | 40 |
| Initial irreversible capacity (mAh/g) | 34 | 41 | 35 | 42 | 37 |
| Discharge characteristic under high current densities (%) | 85 | 87 | 86 | 86 | 84 |
| Cycle retention ratio (%) | 80 | 79 | 81 | 77 | 82 |

Table 2 (Continued)

|  | Comparative Example 1 | Comparative Example 2 | Comparative Example 3 |
|---|---|---|---|
| Rate of decrease of pores of 1µm or smaller (%) | 19 | - | - |
| BET specific surface | 4.9 | 6.4 | - |

| area $(m^2/g)$ | | | |
|---|---|---|---|
| Electrode -plate strength (g) | 80 | 70 | - |
| Immersibility (sec) | 70 | 179 | - |
| Initial irreversible capacity (mAh/g) | 49 | 50 | 47 |
| Discharge characteristic under high current densities (%) | 85 | 79 | 86 |
| Cycle retention ratio (%) | 76 | 65 | - |

As is apparent from Table 2, the lithium secondary batteries employing the negative-electrode materials of Examples 1 to 5, in which two or more different polymeric material (C-1), (C-2) were separately attached to particles (A) (carbon-material particles), have high electrode-mechanical strength, are excellent in immersibility, involve small initial irreversible capacity, are excellent in charge-discharge characteristic under high current densities, and show high cycle retention ratio, i.e. have an excellent balance of various battery characteristics, compared to the lithium secondary battery employing the negative-electrode materials of Comparative Example 1, in which a polymeric material (C-1) having high solubility in the liquid electrolyte alone was attached to particles (A) (carbon-material particles), the lithium secondary battery employing the negative-electrode materials of Comparative Example 2, which composed of particles (A) (carbon-material particles) alone without any polymeric material attached, and the lithium secondary battery employing the negative-electrode materials of Comparative Example 3, in which two polymers were attached to particles (A) (carbon-material particles) simultaneously.

[Industrial Applicability]

The negative-electrode material for a lithium secondary battery according to the present invention can yield a lithium secondary battery having a high electrode-mechanical strength, being excellent in immersibility, involving a small initial irreversible capacity, being excellent in charge-discharge characteristic under high current densities, and having a high cycle retention ratio, i.e. having an excellent balance of various battery characteristics. Also, the method of producing a negative-electrode material for a lithium secondary battery according to the present invention can produce the negative-electrode material having the aforementioned advantageous effects with a simple procedure. The present invention is therefore applicable in various fields employing lithium secondary batteries, such as the fields of electronic equipment.

**Claims**

1. A negative-electrode material for a lithium secondary battery, comprising:

particles (A) selected from the group consisting of carbon-material particles, metal particles, and metal-oxide particles; and
two or more different polymeric materials each attached to different sites of the particles, the polymeric materials including a polymeric material (C-1) having high solubility in a reference liquid electrolyte (B), in which 1M $LiPF_6$ is dissolved in a mixture solvent of ethylene carbonate and methyl ethyl carbonate at a volume ratio of 3:7, and a polymeric material (C-2) having low solubility in the reference liquid electrolyte (B),
wherein the polymeric material (C-1) having high solubility in the reference liquid electrolyte (B) is attached to the interior of pores of the particles (A) and the polymeric material (C-2) having low solubility in the reference liquid electrolyte (B) is attached to the exterior of the particles (A),
wherein the solubility of the polymeric materials (C-1) and (C-2) is determined by preparing a cast film sample having a thickness of 100 μm after drying and a diameter of 12.5 mm, leaving the sample to stand in the reference liquid electrolyte (B) and measuring the rate of area decrease between the 90th day and the 1st day, wherein the material is determined to be a polymeric material (C-1) having high solubility in the reference liquid electrolyte (B) if the rate of area decrease is higher than 3%, and the material is determined to be a polymeric material (C-2) having low solubility in the reference liquid electrolyte (B) if the rate of area decrease is lower than 3% or if the area has increased.

2. The negative-electrode material of claim 1, wherein the polymeric material (C-1) having high solubility in the reference liquid electrolyte (B) is attached so as to be in contact with pores in a volume of 5% or higher to the total volume of pores whose diameters are 1 μm or smaller in the particles (A).

3. The negative-electrode material of claim 1 or 2,
wherein the polymeric material (C-1) having high solubility in the reference liquid electrolyte (B) is at least one material selected from the group consisting of carboxymethyl cellulose, poly(vinylidene fluoride), poly(ethylene oxide), and poly(methyl methacrylate).

4. The negative-electrode material of one of claims 1 to 3, wherein the polymeric material (C-2) having low solubility in the reference liquid electrolyte (B) includes at least one of poly(vinyl alcohol) and cross-linked products of poly(vinyl alcohol).

5. A method of producing the negative-electrode material for a lithium secondary battery of claim 1, the method comprising at least:

   a first attachment step of attaching at least one polymeric material (C-1) having high solubility in the reference liquid electrolyte (B) to particles (A) selected from the group consisting of carbon-material particles, metal particles, and metal-oxide particles; and
   a second attachment step, carried out after the first attachment step, of attaching at least one polymeric material (C-2) having low solubility in the reference liquid electrolyte (B) to the particles (A).

6. A negative-electrode material for a lithium secondary battery, comprising:

   the negative-electrode material of one of claims 1 to 4 as a negative-electrode material (D); and
   at least one carbon material (E) selected from the group consisting of natural graphite, artificial graphite, amorphous-material-coated graphite, and amorphous carbon;
   wherein the ratio of the carbon material (E) to the total of the negative-electrode material (D) and the carbon material (E) is 5 weight % or higher and 95 weight % or lower.

7. A negative electrode for a lithium secondary battery, comprising:

   a current collector; and
   an active-material layer formed on the current collector, the active-material layer containing a binder and the negative-electrode material of one of claims 1 to 4.

8. The negative electrode of claim 7, wherein the active-material layer contains at least one of styrene-butadiene-rubber and carboxymethyl cellulose as the binder.

9. The negative electrode of claim 7 or claim 8, wherein the active-material layer contains three or more different polymers including the polymeric materials (C-1) and (C-2), each attached to the particles (A), and the binder.

10. A lithium secondary battery comprising:

   a positive electrode and a negative electrode capable of intercalating and deintercalating lithium ions; and
   an electrolyte;
   wherein the negative electrode is the negative electrode of one of claims 7 to 9.

**Patentansprüche**

1. Negatives Elektrodenmaterial für eine Lithium-Sekundärbatterie, umfassend:

Partikel (A), ausgewählt aus der Gruppe bestehend aus Kohlenstoffmaterialpartikeln, Metallpartikeln und Metalloxidpartikeln; und
zwei oder mehr verschiedene Polymermaterialien, die jeweils an verschiedene Stellen der Partikel angebracht sind, wobei die Polymermaterialien ein Polymermaterial (C-1) mit hoher Löslichkeit in einem Referenz-Flüssigelektrolyt (B), in dem 1 M $LiPF_6$ in einem Mischlösungsmittel aus Ethylencarbonat und Methylethylcarbonat in einem Volumenverhältnis von 3:7 aufgelöst ist, und ein Polymermaterial (C-2) mit niedriger Löslichkeit im Referenz-Flüssigelektrolyt (B) einschließen,
worin das Polymermaterial (C-1) mit der hohen Löslichkeit im Referenz-Flüssigelektrolyt (B) an das Innere der Poren der Partikel (A) angebracht ist und das Polymermaterial (C-2) mit niedriger Löslichkeit im Referenz-Flüssigelektrolyt (B) an das Äußere der Partikel (A) angebracht ist,
worin die Löslichkeit der Polymermaterialien (C-1) und (C-2) durch Herstellen einer gegossenen Folienprobe mit einer Dicke von 100 μm nach dem Trocknen und einem Durchmesser von 12,5 mm, stehenlassen der Probe im Referenz-Flüssigelektrolyt (B) und Messen der Rate der Flächenabnahme zwischen dem 90. Tag und dem 1. Tag bestimmt wird, worin das Material als Polymermaterial (C-1) mit hoher Löslichkeit im Referenz-Flüssigelektrolyt (B) bestimmt wird, wenn die Rate der Flächenabnahme höher als 3 % ist, und das Material als Polymermaterial (C-2) mit niedriger Löslichkeit im Referenz-Flüssigelektrolyt (B) bestimmt wird, wenn die Rate der Flächenabnahme niedriger als 3 % ist oder wenn die Fläche zugenommen hat.

2. Negatives Elektrodenmaterial gemäß Anspruch 1, worin das Polymermaterial (C-1) mit hoher Löslichkeit im Referenz-Flüssigelektrolyt (B) so angebracht ist, dass es mit Poren in einem Volumen von 5 % oder höher in Bezug auf das Gesamtvolumen der Poren in den Partikel (A), deren Durchmesser 1 μm oder kleiner ist, in Kontakt steht.

3. Negatives Elektrodenmaterial gemäß Anspruch 1 oder 2, worin das Polymermaterial (C-1) mit hoher Löslichkeit im Referenz-Flüssigelektrolyt (B) mindestens ein Material, ausgewählt aus der Gruppe bestehend aus Carboxymethylcellulose, Poly(vinylidenfluorid), Poly(ethylenoxid) und Poly(methylmethacrylat), ist.

4. Negatives Elektrodenmaterial gemäß einem der Ansprüche 1 bis 3, worin das Polymermaterial (C-2) mit niedriger Löslichkeit im Referenz-Flüssigelektrolyt (B) mindestens eines aus Poly(vinylalkohol) und vernetzen Produkten von Poly(vinylalkohol) einschließt.

5. Verfahren zur Herstellung des Negativ-Elektrodenmaterial für eine Lithium-Sekundärbatterie gemäß Anspruch 1, worin das Verfahren mindestens umfasst:

einen ersten Anbringungsschritt des Anbringens mindestens eines Polymermaterials (C-1) mit hoher Löslichkeit im Referenz-Flüssigelektrolyt (B) am Partikel (A), die aus der Gruppe bestehend aus Kohlenstoffmaterialpartikeln, Metallpartikeln und Metalloxidpartikeln ausgewählt sind; und
einen zweiten Anbringungsschritt des des Anbringens mindestens eines Polymermaterials (C-2) mit niedriger Löslichkeit im Referenz-Flüssigelektrolyt (B) auf die Partikel (A), der nach dem ersten Anbringungsschritt durchgeführt wird.

6. Negatives Elektrodenmaterial für eine Lithium-Sekundärbatterie, umfassend:

das negative Elektrodenmaterial gemäß einem der Ansprüche 1 bis 4 als negatives Elektrodenmaterial (D); und
mindestens ein Kohlenstoffmaterial (E), ausgewählt aus der Gruppe bestehend aus natürlichem Graphit, künstlichem Graphit, mit amorphem Material beschichteter Graphit und amorphem Kohlenstoff;
worin das Verhältnis des Kohlenstoffmaterials (E) zur Gesamtheit des negativen Elektrodenmaterials (D) und des Kohlenstoffmaterials (E) 5 Gew.% oder höher und 95 Gew.% oder niedriger ist.

7. Negative Elektrode für eine Lithium-Sekundärbatterie, umfassend:

einen Stromkollektor; und
eine Schicht aus aktivem Material, die auf dem Stromkollektor gebildet ist, wobei die Schicht aus aktivem Material ein Bindemittel und das negative Elektrodenmaterial gemäß einem der Ansprüche 1 bis 4 enthält.

**8.** Negative Elektrode gemäß Anspruch 7, worin die Schicht aus aktivem Material mindestens eines aus Styrolbutadien-Kautschuk und Carboxymethylcellulose als das Bindemittel umfasst.

**9.** Negative Elektrode gemäß Anspruch 7 oder Anspruch 8, worin die Schicht aus aktivem Material drei oder mehr verschiedene Polymere enthält, einschließlich der Polymermaterialien (C-1) und (C-2), die jeweils an die Partikel (A) angebracht sind, und des Bindemittels.

**10.** Lithium-Sekundärbatterie, umfassend:

eine positive Elektrode und eine negative Elektrode, die in der Lage sind, Lithiumionen zu interkalieren und zu deinterkalieren; und
einen Elektrolyten;
worin die negative Elektrode die negative Elektrode gemäß einem der Ansprüche 7 bis 9 ist.

**Revendications**

**1.** Matériau d'électrode négative pour une batterie secondaire au lithium, comprenant :

des particules (A) choisies parmi le groupe constitué de particules de matériau carboné, de particules métalliques et de particules d'oxyde métallique ; et
deux matériaux polymères différents ou plus fixés chacun à différents sites des particules, les matériaux polymères comportant un matériau polymère (C-1) ayant une solubilité élevée dans un électrolyte liquide de référence (B), où une solution 1M de LiPF6 est dissoute dans un mélange solvant de carbonate d'éthylène et de carbonate de méthyle-éthyle à un rapport volumique de 3:7, et un matériau polymère (C-2) ayant une faible solubilité dans l'électrolyte liquide de référence (B),
où le matériau polymère (C-1) ayant une solubilité élevée dans l'électrolyte liquide de référence (B) est fixé à l'intérieur des pores des particules (A) et le matériau polymère (C-2) ayant une faible solubilité dans l'électrolyte liquide de référence (B) est fixé à l'extérieur des particules (A),
où la solubilité des matériaux polymères (C-1) et (C-2) est déterminée en préparant un échantillon de film coulé ayant une épaisseur de 100 $\mu$m après séchage et un diamètre de 12,5 mm, en laissant l'échantillon reposer dans l'électrolyte liquide de référence (B) et en mesurant le taux de diminution de surface entre le 90$^{\text{ème}}$ jour et le 1$^{\text{er}}$ jour, où il est déterminé que le matériau est un matériau polymère (C-1) ayant une solubilité élevée dans l'électrolyte liquide de référence (B) si le taux de diminution de surface est supérieur à 3%, et il est déterminé que le matériau est un matériau polymère (C-2) ayant une faible solubilité dans l'électrolyte liquide de référence (B) si le taux de diminution de surface est inférieur à 3%, ou si la surface a augmenté.

**2.** Matériau d'électrode négative de la revendication 1, dans lequel le matériau polymère (C-1) ayant une solubilité élevée dans l'électrolyte liquide de référence (B) est fixé de manière à être en contact avec des pores dans un volume supérieur ou égal à 5% par rapport au volume total des pores dont les diamètres sont inférieurs ou égaux à 1 $\mu$m dans les particules (A).

**3.** Matériau d'électrode négative de la revendication 1 ou 2, dans lequel le matériau polymère (C-1) ayant une solubilité élevée dans l'électrolyte liquide de référence (B) est au moins un matériau choisi parmi le groupe constitué de cellulose de carboxyméthyle, de poly(fluorure de vinylidène), de poly(oxyde d'éthylène) et de poly(méthacrylate de méthyle).

**4.** Matériau d'électrode négative de l'une des revendications 1 à 3, dans lequel le matériau polymère (C-2) ayant une faible solubilité dans l'électrolyte liquide de référence (B) comporte du poly(alcool de vinyle) et/ou des produits réticulés de poly(alcool de vinyle).

**5.** Procédé de production d'un matériau d'électrode négative pour une batterie secondaire au lithium de la revendication 1, le procédé comprenant au moins :

une première étape de fixation qui consiste à fixer au moins un matériau polymère (C-1) ayant une solubilité élevée dans l'électrolyte liquide de référence (B) à des particules (A) choisies parmi le groupe constitué de particules de matériau carboné, de particules métalliques et de particules d'oxyde métallique ; et
une deuxième étape de fixation, exécutée après la première étape de fixation, qui consiste à fixer au moins un matériau polymère (C-2) ayant une faible solubilité dans l'électrolyte liquide de référence (B) aux particules (A).

6. Matériau d'électrode négative pour une batterie secondaire au lithium, comprenant :

le matériau d'électrode négative de l'une des revendications 1 à 4 en tant que matériau d'électrode négative (D) ; et
au moins un matériau carboné (E) choisi parmi le groupe constitué de graphite naturel, de graphite artificiel, de graphite revêtu d'un matériau amorphe, et de carbone amorphe ;
où le rapport du matériau carboné (E) par rapport à la quantité totale du matériau d'électrode négative (D) et du matériau carboné (E) est supérieur ou égal à 5 % en poids et inférieur ou égal à 95 % en poids.

7. Electrode négative pour une batterie secondaire au lithium, comprenant :

un collecteur de courant ; et
une couche de matériau actif formée sur le collecteur de courant, la couche de matériau actif contenant un liant et le matériau d'électrode négative de l'une des revendications 1 à 4.

8. Electrode négative de la revendication 7, dans laquelle la couche de matériau actif contient, en tant que liant, le caoutchouc styrène-butadiène et/ou la cellulose de carboxyméthyle.

9. Electrode négative de la revendication 7 ou 8, dans laquelle la couche de matériau actif contient au moins trois polymères différents comportant les matériaux polymères (C-1) et (C-2), dont chacun est fixé aux particules (A), et le liant.

10. Batterie secondaire au lithium comprenant :

une électrode positive et une électrode négative capable d'intercaler et de désintercaler des ions lithium ; et
un électrolyte ;
où l'électrode négative est l'électrode négative de l'une des revendications 7 à 9.

**EP 1 791 199 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI9219188 B
- JP HEI7235328 B
- JP HEI10214629 B
- JP 10106540 A
- US 6428929 B1